# EUROPEAN PATENT SPECIFICATION

(11) **EP 1 154 192 B1**
(45) Date of publication and mention of the grant of the patent: **23.11.2005**
(21) Application number: 01650053.0
(22) Date of filing: 04.05.2001
(51) Int. Cl.: F16L 41/06

(54) **Tapping Saddle**
Abzweigsattle
Selle de dérivation

(30) Priority: 09.05.2000 NO 20002414
(43) Date of publication of application: 14.11.2001
(73) Proprietor: Raufoss Water & Gas AS, 2831 Raufoss (NO)
(72) Inventor: Slattsveen, Tore, 2830 Raufoss (NO); Monsen, Alf Greve, 2830 Raufoss (NO)
(74) Representative: Brophy, David Timothy

(56) References cited:
- FR-A- 2 142 283
- FR-A- 2 772 874
- GB-A- 2 103 321

## Description

The present invention relates to a tapping saddle, i.e. a saddle that can be coupled to the outside of a pipe for drilling through the pipe wall, in order to constitute a coupling point for a second pipe forming a branch from the first pipe.

Such saddles comprise a housing having a throughgoing opening through which drilling can be performed. On a concave end of the housing, being conformed to the curvature of the pipe and adapted to face the pipe, a sealing ring is normally mounted, for instance an O-ring, adapted to be pressed against the pipe wall around the hole to be drilled. The O-ring has to be bent into a curvature corresponding to the curvature of the concave end of the housing. The housing can be tightened against the pipe, which may be carried out by use of different members, such as a bridle, by screwing the housing and the bridle together. When a bridle is being used, the housing and the bridle are adapted to a certain pipe dimension, in that the bridle has such a length that tightening of the housing can take place, whereby the O-ring is compressed against the pipe and causes sealing.

It must, in other words, be ensured that the housing is correctly tightened against the pipe and that the O-ring is actually compressed. If the bridle is too long for the pipe in question, or if other means are used which do not bias the housing correctly against the pipe, the tightening of the housing will be incomplete. Even when the housing is correctly tightened a leakage may occur due to deformation of the pipe wall by the force exerted by the O-ring.

A tapping saddle is described in FR 2 772 874. The sealing ring is compressed by screwing a sleeve onto the saddle. The operator has to judge whether the sleeve has been screwed adequately onto the saddle for complete sealing to occur. This involves a degree of uncertainty as the operator cannot see the contact made by the sealing ring on the pipe to be tapped.

The above problems are avoided by the present invention.

The tapping saddle according to the present invention is defined by claim 1.

Embodiments of the tapping saddle are defined by the dependent claims.

The compensator sleeve constituting a carrier for the sealing ring can be shifted inside the housing, and is subjected to a biasing or springy force in the direction towards the pipe wall. Thereby is ensured that the sealing ring is pressed against the pipe wall by a suitable force, also if the housing is not completely tightened against the pipe. Moreover, the springy force compensates for a possible deformation of the pipe wall.

The housing can be tightened against the pipe by use of various members, and a bridle is merely mentioned as an example. The housing may for instance be lashed against the pipe. Another example is the use of one or more clamping rings or bands tightened around the housing and the pipe. Still another example is the use of a plate or rod instead of a bridle. The invention is not limited with respect to such tightening means.

The invention will in the following be explained more detailed, with reference to the accompanying drawing, showing an example of an embodiment of a tapping saddle according to the invention.
- Fig. 1: shows in an axial projection a pipe on which has been mounted a tapping saddle according to the invention.
- Fig. 2: shows a section through the pipe and the saddle, along the line I-I in Fig. 1.
- Fig. 3: shows the different parts of the saddle and the pipe in an exploded view.

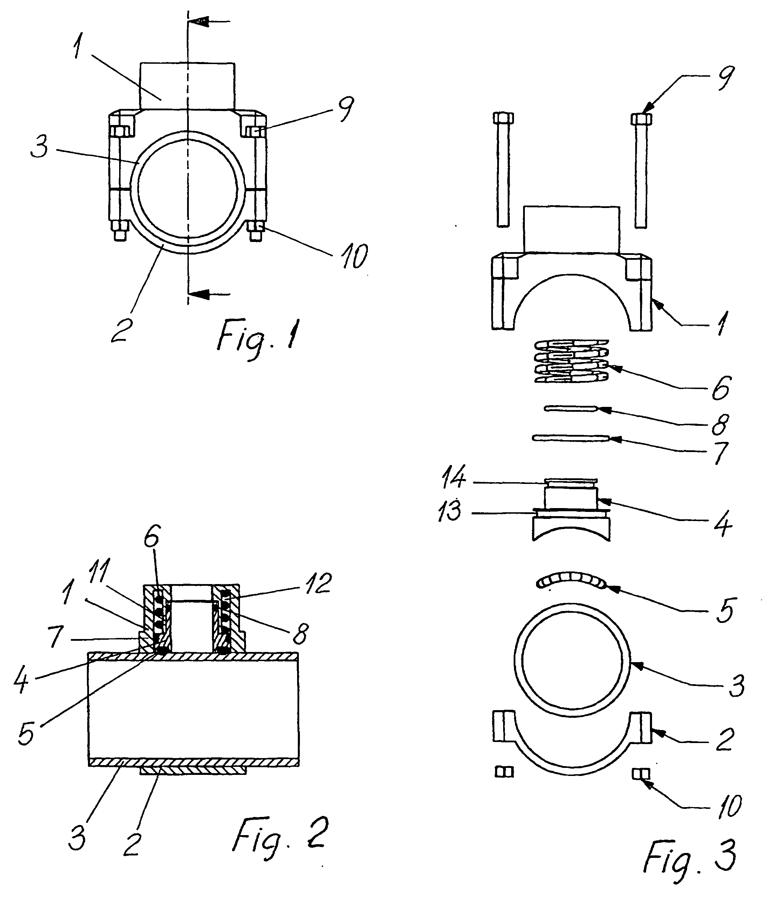

In the embodiment shown the tapping saddle according to the invention comprises a housing 1 and a bridle 2. The housing 1 can be tightened against a pipe 3 by means of screws 9 and nuts 10, whereby the housing 1 and the bridle 2 together surround the pipe 3, as it appears from Fig. 1. For instance four screws 9 and nuts 10 can be used, without this being mentioned as a limitation. As shown in Fig. 2 the housing 1 contains a compensator sleeve 4, and a sealing ring 5 is situated against the inner end of the sleeve 4, possibly in a concavely curved ring groove at that end. By tightening of the housing 1 against the pipe 3 the sealing ring 5 will be pressed against the outside of the pipe 3, in that the sleeve 4 is pressed towards the outside of the pipe 3 by a spring 6. Fig. 2 also shows a second sealing ring 7 in a ring groove 13 on the exterior of the sleeve 4 and a third sealing ring 8 in a ring groove 14, also on the exterior of the sleeve 4, at the axially outermost end thereof. These sealing rings 7 and 8 cause sealing between the sleeve 4 and the housing 1. In the embodiment shown the housing 1 comprises an interior, thin sleeve-shaped wall 11 against which the sealing ring 8 is situated and which delimits a space 12 for the spring 6.

Fig. 3 shows screws 9 and nuts 10, but it will be appreciated that the housing 4 or the bridle 2 may have threaded holes into which the screws 9 can be screwed, whereby nuts can be omitted.

It will also be appreciated that screws and nuts used for tightening merely constitute examples, as any mechanism suited for tightening can be used. As an example is mentioned a locking clamp.

Fig. 3 shows a single helical spring 6, but it will be appreciated that two or more springs can also be used.

Fig. 3 also shows a curved O-ring 5 for sealing against the pipe 3. However, a normal O-ring will adapt itself to the curvature of the pipe and needs not initially be curved.

As mentioned the spring biased compensator sleeve 4 will ensure sealing against the pipe 3 even when the housing 1 has not been correctly tightened against the pipe 3, and deformation of the pipe wall due to the force exerted by the sealing ring 5 will be compensated for by shifting of the compensator sleeve 4.

All of the sealing rings can be O-rings or other types of sealing rings.

## Claims

1. A tapping saddle comprising a housing (1) for being tightened against a pipe (3), said housing (1) having a throughgoing opening for drilling through the pipe wall, a sealing ring (5) provided in the housing (1) in order to be pressed against the pipe wall around a hole to be drilled therethrough, wherein the sealing ring (5) is situated against an inner end of a compensator sleeve (4) shiftably provided in the housing (1) **characterised in that** the inner end of the compensator sleeve is concavely curved and **in that** a helical spring acts against the compensator sleeve, the helical spring being mounted in a space in the housing such that when the housing is tightened against a pipe the spring urges the sleeve towards the pipe and the sleeve presses the sealing ring against the pipe wall.

2. A tapping saddle as claimed in claim 1, wherein the compensator sleeve (4) has a groove for the sealing ring (5) in its innermost end.

3. A tapping saddle as claimed in claim 1 or 2, wherein a second and a third sealing ring (7, 8) for sealing between the compensator sleeve (4) and the housing (1) are situated in a respective ring groove (13, 14) on the exterior of the compensator sleeve (4).

4. A tapping saddle as claimed in claim 1 or 2, wherein the housing (1) contains an interior sleeve-shaped wall (11) forming a partition between the helical spring (6) and a portion of the compensator sleeve (4), and that the third sealing ring (8) is situated against this wall (11).

## Patentansprüche

1. Abzweigungssattel mit einem Gehäuse (1), welches gegen ein Rohr (3) befestigbar ist, wobei das Gehäuse (1) eine durchgehende Öffnung zum Bohren durch die Rohrwandung hindurch aufweist, wobei im Gehäuse (1) ein Dichtring (5) vorgesehen ist, um gegen die Rohrwandung um ein hier hindurch zu bohrendes Loch herum gedrückt zu werden, wobei der Dichtring (5) gegen ein inneres Ende einer Ausgleichshülse (4) anliegt, die im Gehäuse (1) verschieblich vorgesehen ist, **dadurch gekennzeichnet, dass** das innere Ende der Ausgleichshülse konkav gekrümmt ist und dass eine Spiralfeder gegen die Ausgleichshülse wirkt, wobei die Spiralfeder so in einem Raum im Gehäuse montiert ist, dass dann, wenn das Gehäuse gegen das Rohr befestigt wird, die Feder die Hülse zum Rohr hin drückt und die Hülse den Dichtring gegen die Rohrwandung drückt.

2. Abzweigungssattel nach Anspruch 1, wobei die Ausgleichshülse (4) in ihrem innersten Ende eine Nut für den Dichtring (5) aufweist.

3. Abzweigungssattel nach Anspruch 1 oder 2, wobei ein zweiter und ein dritter Dichtring (7, 8) zur Abdichtung zwischen der Ausgleichshülse (4) und dem Gehäuse (1) jeweils in einer entsprechenden Ringnut (13, 14) auf dem Äußeren der Ausgleichshülse (4) angeordnet sind.

4. Abzweigungssattel nach Anspruch 1 oder 2, wobei das Gehäuse (1) eine innere hülsenförmige Wandung (11) umfasst, die eine Zwischenwand zwischen der Spiralfeder (6) und einem Abschnitt der Ausgleichshülse (4) bildet, und dass der dritte Dichtring (8) gegen diese Wandung (11) angeordnet ist.

## Revendications

1. Selle de dérivation comprenant un boîtier (1) pour être serré contre un tuyau (3), ledit boîtier (1) ayant une ouverture débouchante pour percer à travers la paroi du tuyau, une bague d'étanchéité (5) prévue dans le boîtier (1) afin d'être comprimée contre la paroi de tuyau autour d'un trou à percer à travers celle-ci, dans laquelle la bague d'étanchéité (5) est située contre une extrémité interne d'un manchon compensateur (4) prévu de manière déplaçable dans le boîtier (1), **caractérisée en ce que** l'extrémité interne du manchon compensateur est incurvée de manière concave et **en ce qu'**un ressort hélicoïdal agit contre le manchon compensateur, le ressort hélicoïdal étant monté dans un espace situé dans le boîtier de sorte qu'au moment où le boîtier est serré contre un tuyau, le ressort pousse le manchon vers le tuyau et le manchon comprime la bague d'étanchéité contre la paroi de tuyau.

2. Selle de dérivation selon la revendication 1, dans laquelle le manchon compensateur (4) possède une rainure pour la bague d'étanchéité (5) dans son extrémité située le plus à l'intérieur.

3. Selle de dérivation selon la revendication 1 ou 2, dans laquelle une seconde et une troisième bague d'étanchéité (7, 8) pour réaliser l'étanchéité entre le manchon compensateur (4) et le boîtier (1) sont situés dans une rainure de bague (13, 14) respective sur l'extérieur du manchon compensateur (4).

4. Selle de dérivation selon la revendication 1 ou 2, dans laquelle le boîtier (1) contient un paroi intérieure en forme de manchon (11) formant une séparation entre le ressort hélicoïdal (6) et une partie du manchon compresseur (4) et que la troisième bague d'étanchéité (8) est située contre sa paroi (11).
